# EUROPÄISCHE PATENTANMELDUNG

(11) **EP 4 378 830 A1**
(43) Veröffentlichungstag der Anmeldung: **05.06.2024**
(21) Anmeldenummer: 23212352.1
(22) Anmeldetag: 27.11.2023
(51) Int. Cl.: B64C 29/00, B64D 29/02, B64D 27/31, B64D 33/08

(54) **NACELLEVORRICHTUNG MIT LUFTLEITVORRICHTUNG UND SENKRECHT-START UND -LANDUNGSLUFTFAHRZEUG**

(30) Priorität: 30.11.2022 DE 102022131771
(71) Anmelder: Rolls-Royce Deutschland Ltd & Co KG, 15827 Blankenfelde-Mahlow (DE)
(72) Erfinder: BAUER, Johannes Gabriel, 15827 Blankenfelde-Mahlow (DE)

(57) **Zusammenfassung**

Die Erfindung betrifft eine Nacellevorrichtung (1) für ein Senkrecht-Start- und - Landungsluftfahrzeug (10), wobei die Nacellevorrichtung (1) mit einer Antriebsvorrichtung (12) über eine Pylonvorrichtung (2) mit einer Tragfläche (11) des Senkrecht-Start- und -Landungsluftfahrzeugs (10) verbunden ist und um eine Drehachse (D) zwischen einer Vortriebsposition (A) und einer Auftriebsposition (B) relativ zur Pylonvorrichtung (2) verschwenkbar ist, gekennzeichnet durch eine Luftleitvorrichtung (5) mit einer ersten Einlassöffnung (6) an der Pylonvorrichtung (2), die in dem Bereich angeordnet ist, in dem der von der Antriebsvorrichtung (12) in der Auftriebsposition (B) geförderte erste Luftstrom (L₁) auf die Pylonvorrichtung (2) auftrifft und mit einer zweite Einlassöffnung (7), die an der Nacellevorrichtung (1) und / oder der Pylonvorrichtung (2) so angeordnet ist, dass ein zweiter Luftstrom (L₂) in der Vortriebsposition durch die zweite Einlassöffnung (7) einströmen kann, wobei die Luftleitvorrichtung (5) ein Luftverteilungsmittel (8) aufweist, mit dem die strömenden Luftmengen (L₁, L₂) aus der ersten Einlassöffnung (6) und der zweiten Einlassöffnung (7) im Inneren der Nacellevorrichtung (1) steuerbar sind.

## Beschreibung

Die Erfindung betrifft eine Nacellevorrichtung mit den Merkmalen des Anspruchs 1 und ein Senkrecht-Start und -Landungsluftfahrzeug mit den Merkmalen des Anspruchs 10.

Luftfahrzeuge, die senkrecht starten und landen können (im Englischen: VTOL: *vertical take off and landing*), sind grundsätzlich bekannt. Wird als Antriebsvorrichtung eines solchen Luftfahrzeuges ein elektrischer Antrieb verwendet, so wird dieses auch als eVTOL Luftfahrzeug bezeichnet. Gerade für den Einsatz von Luftfahrzeugen im städtischen Bereich (im Englischen: UAM: *urban air mobility*) sind solche Luftfahrzeuge von erheblichem Interesse.

Dabei kommen grundsätzlich unterschiedliche Bauformen zum Einsatz, wie z.B. reine Drehflügler oder Bauformen mit schwenkbaren Tragflächen oder schwenkbaren Antrieben.

Bei einer Ausführung mit verschwenkbaren Antrieben werden diese z.B. mittels einer schwenkbaren Nacellevorrichtung (auch als Gondeln bezeichnet) von einer Auftriebsposition in eine Vortriebsposition gebracht. Die Nacellevorrichtungen sind dabei über eine Pylonvorrichtung mit einer Tragfläche verbunden, wobei die Verschwenkung um eine Achse am Gehäuse der Pylonvorrichtung erfolgt.

Es besteht die Aufgabe, verbesserte Nacellevorrichtungen zu schaffen, die insbesondere eine effiziente Verteilung von Kühlluft erlauben.

Die Aufgabe wird durch eine Nacellevorrichtung mit den Merkmalen des Anspruchs 1 gelöst.

Die Nacellevorrichtung für ein Senkrecht-Start- und -Landungsluftfahrzeug weist eine Antriebsvorrichtung auf, wobei die Nacellevorrichtung über eine Pylonvorrichtung mit einer Tragfläche des Senkrecht-Start- und - Landungsluftfahrzeugs verbunden ist. Die Nacellevorrichtung und damit auch die Antriebsvorrichtung, sind um eine Drehachse zwischen einer Vortriebsposition und einer Auftriebsposition relativ zur Pylonvorrichtung verschwenkbar.

Die Nacellevorrichtung weist eine Luftleitvorrichtung auf, die mindestens zwei Einlassöffnungen aufweist. Die erste Einlassöffnung ist an der Pylonvorrichtung in dem Bereich angeordnet, in dem der von der Antriebsvorrichtung in der Auftriebsposition (primär vertikal nach unten) geförderte erste Luftstrom auf die Pylonvorrichtung auftrifft. Damit kann der nach unten ausgerichtete erste Luftstrom, der z. B. von einem Propeller der Antriebsvorrichtung gefördert wird, von der ersten Einlassöffnung aufgefangen werden.

Die Nacellevorrichtung weist ferner eine zweite Einlassöffnung auf, die an der Nacellevorrichtung selbst und / oder der Pylonvorrichtung so angeordnet ist, dass ein zweiter Luftstrom in der Vortriebsposition durch die zweite Einlassöffnung einströmen kann, so dass auch dieser Luftstrom als Kühlluft nutzbar ist.

Ferner weist die Luftleitvorrichtung ein Luftverteilungsmittel auf, mit dem die strömenden Luftmengen aus der ersten Einlassöffnung und der zweiten Einlassöffnung im Inneren der Nacellevorrichtung steuerbar sind. Damit kann mit einem Mittel, dem Luftverteilungsmittel, die Strömung der Kühlluft in den unterschiedlichen Betriebspositionen eingestellt werden, was Gewicht spart.

Dabei kann das Luftverteilungsmittel in einer Ausführungsform drehbar an der Nacellevorrichtung angeordnet sein, so dass es in der Vortriebsposition den zweiten Luftstrom von der zweiten Einlassöffnung in die Luftleitvorrichtung führt und in der Auftriebsposition den ersten Luftstrom von der ersten Einlassöffnung in die Luftleitvorrichtung führt. Durch die Drehung der Nacellevorrichtung um die Drehachse wird jeweils das Luftverteilungsmittel mitgedreht, wobei es sich in den beiden Positionen jeweils an die Luftleitvorrichtung (z.B. Kanäle, Rohre etc.) anschließt, so dass die einströmenden Luftströme ins Innere geführt werden können. Somit sind außer der ohnehin beweglichen Nacellevorrichtung keine weiteren beweglichen Teile notwendig.

Für eine effiziente Aufnahme der Luftströme kann das Luftverteilungsmittel in einer Ausführungsform in der Vortriebsposition so orientiert sein, dass die zweite Einlassöffnung mindestens teilweise in Flugrichtung orientiert ist. Damit kann die zweite Einlassöffnung Luft aufnehmen, die vom Propeller in Vortriebsrichtung gefördert wird. Die Einlassöffnung kann somit senkrecht oder auch geneigt zur Flugrichtung geneigt sein, solange der freie Querschnitt Luft aus der Flugrichtung aufnehmen kann.

In einer weiteren Ausführungsform kann das Luftverteilungsmittel in der Auftriebsposition so orientiert sein, dass es an einen Zulaufkanal für den ersten Luftstrom von der ersten Einlassöffnung anschließbar ist. Damit werden zusätzliche Leitungen zur Luftverteilung in der Nacellevorrichtung eingespart, was zu einer Gewichtsreduktion führt.

Dabei kann das Luftverteilungsmittel mindestens teilweise rohrförmig oder als NACA-Einlass ausgebildet sein, so dass in beiden Fällen eine effiziente Einströmung in die Luftleitvorrichtung der Nacellevorrichtung möglich ist.

Wenn die Antriebsvorrichtung in einer Ausführungsvorrichtung einen Propeller aufweist, der im Betrieb eine Drehfläche aufweist, kann die erste Einlassöffnung in dem Bereich der senkrechten Projektion der Drehfläche auf die Oberseite der Pylonvorrichtung liegen. Damit ist sichergestellt, dass der gezielt nach unten geförderte Luftstrom auf die Pylonvorrichtung mit der ersten Einlassöffnung trifft.

Insbesondere kann die erste Einlassöffnung vertikal unterhalb des Bereiches der Drehfläche angeordnet sein, in dem der Gesamtdruck der vom Propeller geförderten Luft maximal ist. Damit würde der geförderte Luftstrom effizient von der ersten Einlassöffnung eingefangen.

Ferner kann die über die Antriebsvorrichtung und über die erste Einlassöffnung und / oder über die zweite Einlassöffnung eingeführten Luftströme Kühlluft zur Antriebsvorrichtung und / oder zu einem Elektromotor geführt werden.

Für eine effiziente Förderung der Luft in der Vortriebsposition kann die zweite Einlassöffnung mindestens teilweise als NACA-Einlauf ausgebildet sein.

Die Aufgabe wird auch durch ein Senkrecht- Start- und -Landungsluftfahrzeug mit den Merkmalen des Anspruchs 10 gelöst. Dabei kann die Antriebseinheit mit einer Verschwenkvorrichtung gekoppelt sein, die als Hebelgetriebe ausgebildet ist, insbesondere mit einem hydraulisch, elektrisch oder pneumatisch angetriebenen Hebelgetriebe.

Im Zusammenhang mit den Figuren werden Ausführungsbeispiele erläutert. Dabei zeigt
Figur 1 eine schematische Darstellung einer ersten Ausführungsform einer Nacellevorrichtung in einer ersten Position (Vortriebsposition);
Figur 2 eine schematische Darstellung der ersten Ausführungsform der Nacellevorrichtung gemäß Figur 1 in einer zweiten Position (Auftriebsposition);
Figur 3 eine schematische Darstellung der ersten Ausführungsform gemäß Figuren 1 und 2 mit einer Darstellung der Strömungen in einer Luftleitvorrichtung;
Figur 4 eine schematische Darstellung einer zweiten Ausführungsform einer Nacellevorrichtung in einer ersten Position (Vortriebsposition);
Figur 5 eine schematische Darstellung der zweiten Ausführungsform der Nacellevorrichtung gemäß Figur 4 in einer zweiten Position (Auftriebsposition);
Figur 6 eine schematische Darstellung der zweiten Ausführungsform gemäß Figuren 4 und 5 mit einer Darstellung der Strömungen in einer Luftleitvorrichtung;

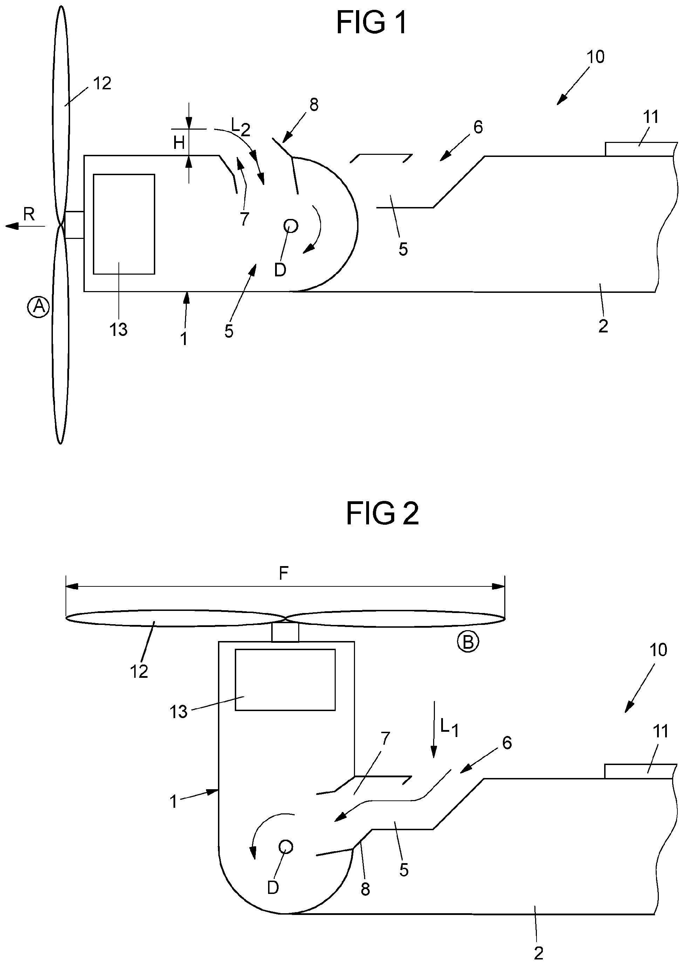

Figur 1 zeigt in schematischer Weise eine Ausführungsform einer Nacellevorrichtung 1, die um eine Drehachse D von einer Vortriebsposition A (wie in Figur 1 dargestellt) in eine Auftriebsposition B verschwenkbar ist (siehe Figur 2). An der Nacellevorrichtung 1 ist eine Antriebsvorrichtung 12 mit einem Propeller angeordnet.

Die Verschwenkung der Nacellevorrichtung 1 - und damit auch der Antriebsvorrichtung 12 - ist auch umkehrbar, so dass die Nacellevorrichtung 1 von der Auftriebsposition B in die Vortriebsposition A schwenkbar ist. Damit ist diese Ausführungsform besonders für ein Senkrecht-Start- und -Landungsluftfahrzeug 10 geeignet.

In der hier dargestellten Ausführungsform ist die Nacellevorrichtung 1 verschwenkbar an einer Pylonvorrichtung 2 angeordnet, die wiederum an einer Tragfläche 11 des hier nicht vollständig dargestellten Senkrecht-Start- und - Landungsluftfahrzeugs 10 angeordnet ist.

Die Drehachse D liegt bei der hier dargestellten Ausführungsform im Inneren der Pylonvorrichtung 2, so dass sich die Nacellevorrichtung 1 mit ihrem hinteren oder unteren Teil innerhalb der Pylonvorrichtung 2 drehen kann.

Im Inneren der Nacellevorrichtung 1 und der Pylonvorrichtung 2 ist eine Luftleitvorrichtung 5 angeordnet, mit der Kühlluft L₁, L₂ in effizienter und vor allem adaptiver Weise von der Umgebung des Senkrecht-Start- und - Landungsluftfahrzeugs 10 z.B. zu einem Elektromotor 13 der Antriebseinheit 12 geführt werden kann.

Die unterschiedlichen Arten der Luftführung in den unterschiedlichen Positionen A, B sind im Folgenden dargestellt.

Dabei weist die Nacellevorrichtung 1 im hinteren Bereich (gesehen in der Vortriebsposition) um die Drehachse D ein Luftverteilungsmittel 8 auf, das an der Wandung der Nacellevorrichtung 1 angeordnet ist. Das Luftverteilungsmittel 8 ist somit mit der Nacellevorrichtung 1 um die Drehachse D schwenkbar. Dies ist z.B. an der Figur 2 erkennbar, da es dort um 90° im Uhrzeigersinn verschwenkt liegt.

In der Vortriebsposition gemäß Figur 1 ragt das Luftverteilungsmittel 8 um eine Höhe H aus der Wandung der Nacellevorrichtung 1 hinaus und ist in Flugrichtung geneigt. Dies bedeutet, dass eine zweite Einlassöffnung 7 mindestens teilweise in Flugrichtung orientiert ist.

Damit kann ein zweiter Luftstrom L₂ von der Umgebung des Senkrecht-Start- und -Landungsluftfahrzeugs 10 über die zweite Einlassöffnung 7 in die Luftleitvorrichtung 5 im Inneren der Nacellevorrichtung 1 geführt werden.

Das Luftverteilungsmittel 8 kann dabei z.B. ein Stück Rohr aufweisen, dass in Richtung der Flugrichtung gekrümmt ist. Es kann aber auch mindestens teilweise als NACA-Einlass ausgebildet sein, über die der zweite Luftstrom L₂ in das Innere der Nacellevorrichtung 1 oder der Pylonvorrichtung 2 gelangen kann.

In der Auftriebsposition B (siehe Figur 2) ist der Propeller der Antriebsvorrichtung 12 nach oben ausgerichtet, so dass (im Betrieb) eine Drehfläche F des Propellers teilweise oberhalb der Pylonvorrichtung 2 liegt. In der Oberfläche der Pylonvorrichtung 2 ist eine erste Einlassöffnung 6 in dem Bereich der senkrechten Projektion der Drehfläche F angeordnet. Damit trifft der von dem Propeller geförderte Luftstrom L₁ auch auf die erste Einlassöffnung 6, so dass der Luftstrom L₁ in die Luftleitvorrichtung 5 im Inneren der Pylonvorrichtung 2 geführt werden kann.

Die Luftleitvorrichtung 5 weist hier einen Kanal auf, der in der Auftriebsposition B an das Luftverteilungsmittel 8 anschließt und jetzt in diese Richtung geschwenkt wurde. Damit kann die Luft in das Innere der Nacellevorrichtung 5 gelangen und z.B. den Elektromotor 13 auch in dieser Flugphase kühlen.

Durch die Verwendung einer Nacellevorrichtung 1 mit einem mit-verschwenkbaren Luftverteilungsmittel 8 wird Gewicht eingespart, wobei gleichzeitig insbesondere die hohen Kühlanforderungen für den Fall des Auftriebs erfüllt werden können. Die vom Propeller nach unten geförderte Luft kann effizient als Kühlluft genutzt werden, was wichtig ist, da in dieser Position kaum Fahrtwind als Kühlluft zur Verfügung steht.

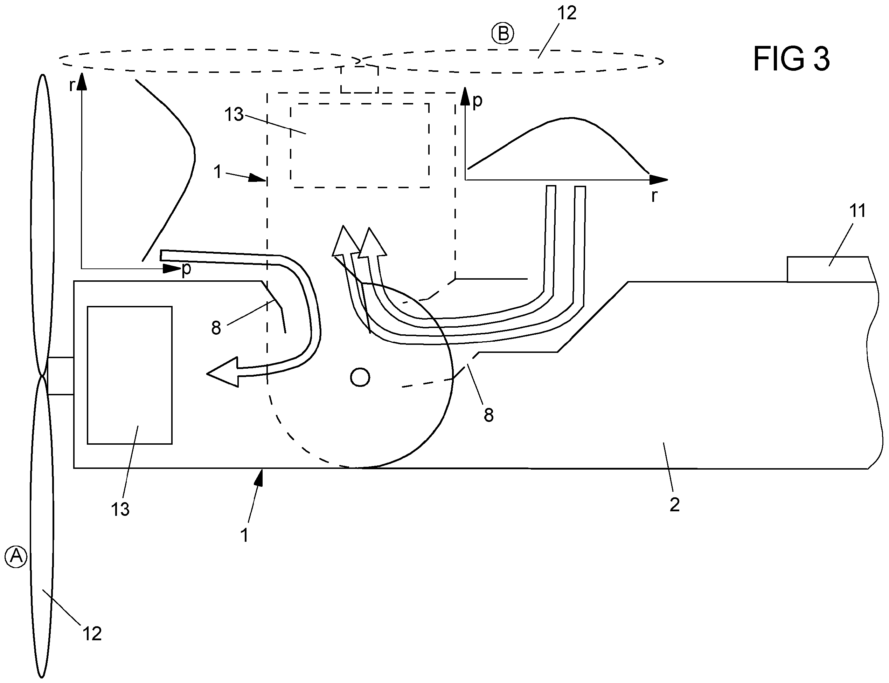

Dabei liegen bestimmte Druckverhältnisse vor, die in schematischer Weise in der Figur 3 dargestellt sind, wobei die beiden Positionen A, B der Nacellevorrichtung 1 hier überlagert dargestellt sind.

Das Koordinatensystem unterhalb des Propellers in der Auftriebsposition B gibt auf der x-Achse die radiale Position des Propellers an, auf der y-Achse ist der Gesamtdruck im VTOL Flug dargestellt. Es ist ersichtlich, dass ein Maximum des Gesamtdrucks in einem gewissen radialen Bereich der Drehfläche F liegt.

In der Figur 3 sind auch die Druckverhältnisse in der Vortriebsposition A in Form eines Koordinatensystems dargestellt, wobei die Achsen hier um 90° gekippt dargestellt sind; die x-Achse zeigt den Gesamtdruck der vom Propeller geförderten Luft an, die y-Achse gibt die radiale Position des Propellers an. Das Maximum des Gesamtdrucks liegt - analog zur Auftriebsposition - im Bereich zwischen der Nabe des Propellers und der Spitze des Propellers. Da die zweite Einlassöffnung 7 hier nahe an der Nabe des Propellers liegt, muss die Höhe H (siehe Figur 1), mit der die zweite Einlassöffnung 7 aus dem Gehäuse der Nacellevorrichtung 1 herausragt, entsprechend ausgebildet sein, damit ein ausreichend großer zweiter Luftstrom L₂ in dieser Position einströmen kann.

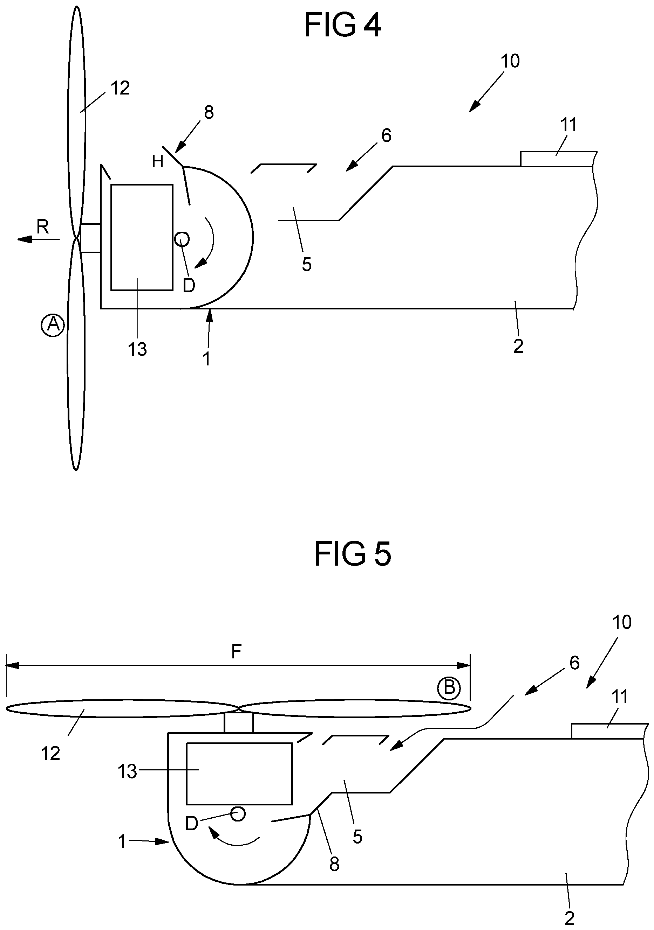

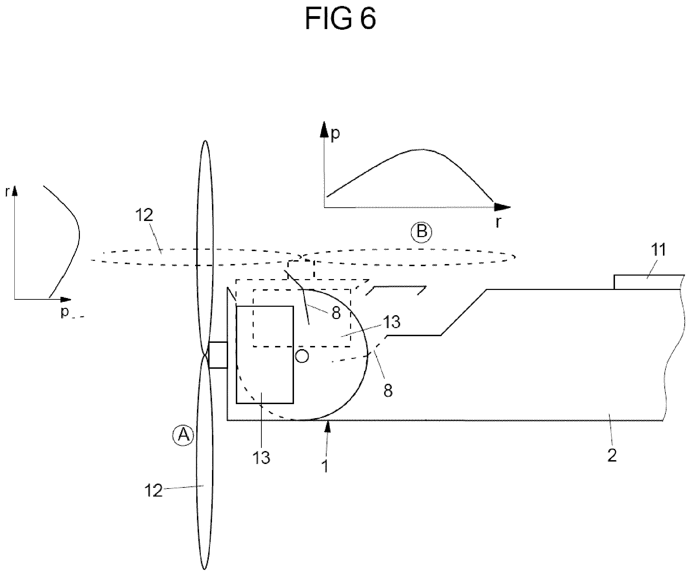

In den Figuren 4 bis 6 ist als zweite Ausführungsform eine Abwandlung der ersten Ausführungsform gemäß den Figuren 1 bis 3 dargestellt. In der zweiten Ausführungsform ist verschwenkbare Teil der Nacellevorrichtung 1 kürzer ausgebildet, so dass der Einlauf für den Luftstrom L₂ direkt über dem Elektromotor 13 angeordnet ist. Aus Gründen der Übersichtlichkeit sind die Luftströme L₁, L₂ in den Figuren 4 bis 6 nicht darstellt, da sie in der zweiten Ausführungsform analog zur ersten Ausführungsform verlaufen.

### Bezugszeichenliste

- 1: Nacellevorrichtung
- 2: Pylonvorrichtung
- 5: Luftleitvorrichtung
- 6: erste Einlassöffnung
- 7: zweite Einlassöffnung
- 8: Luftverteilungsmittel

- 10: Senkrecht-Start- und -Landungsluftfahrzeug
- 11: Tragfläche
- 12: Antriebsvorrichtung, Rotor
- 13: Elektromotor

- A: Vortriebsposition der Antriebsvorrichtung
- B: Auftriebsposition der Antriebsvorrichtung
- D: Drehachse der verschwenkbaren Nacellevorrichtung
- F: Drehfläche des Propellers
- L₁: erster geförderter Luftstrom
- L₂: zweiter geförderter Luftstrom
- R: Flugrichtung

## Patentansprüche

1. Nacellevorrichtung (1) für ein Senkrecht-Start- und -Landungsluftfahrzeug (10), wobei die Nacellevorrichtung (1) mit einer Antriebsvorrichtung (12) über eine Pylonvorrichtung (2) mit einer Tragfläche (11) des Senkrecht-Start- und - Landungsluftfahrzeugs (10) verbunden ist und um eine Drehachse (D) zwischen einer Vortriebsposition (A) und einer Auftriebsposition (B) relativ zur Pylonvorrichtung (2) verschwenkbar ist,
**gekennzeichnet durch**
eine Luftleitvorrichtung (5)
mit einer ersten Einlassöffnung (6) an der Pylonvorrichtung (2), die in dem Bereich angeordnet ist, in dem der von der Antriebsvorrichtung (12) in der Auftriebsposition (B) geförderte erste Luftstrom (L₁) auf die Pylonvorrichtung (2) auftrifft und
mit einer zweite Einlassöffnung (7), die an der Nacellevorrichtung (1) und / oder der Pylonvorrichtung (2) so angeordnet ist, dass ein zweiter Luftstrom (L₂) in der Vortriebsposition durch die zweite Einlassöffnung (7) einströmen kann, wobei
die Luftleitvorrichtung (5) ein Luftverteilungsmittel (8) aufweist, mit dem die strömenden Luftmengen (L₁, L₂) aus der ersten Einlassöffnung (6) und der zweiten Einlassöffnung (7) im Inneren der Nacellevorrichtung (1) steuerbar sind.

2. Nacellevorrichtung (1) nach Anspruch 1, **dadurch gekennzeichnet, dass** das Luftverteilungsmittel (8) drehbar an der Nacellevorrichtung (1) angeordnet ist, so dass es in der Vortriebsposition (A) den zweiten Luftstrom (L₂) von der zweiten Einlassöffnung (7) in die Luftleitvorrichtung (5) führt und in der Auftriebsposition (B) den ersten Luftstrom (L₁) von der ersten Einlassöffnung (6) in die Luftleitvorrichtung (5) führt.

3. Nacellevorrichtung (1) nach Anspruch 1 oder 2, **dadurch gekennzeichnet, dass** das Luftverteilungsmittel (8) in der Vortriebsposition (A) so orientiert ist, dass die zweite Einlassöffnung (7) mindestens teilweise in Flugrichtung (R) orientiert ist.

4. Nacellevorrichtung (1) nach mindestens einem der vorhergehenden Ansprüche, **dadurch gekennzeichnet, dass** das Luftverteilungsmittel (8) in der Auftriebsposition (B) so orientiert ist, dass es an einen Zulaufkanal für den ersten Luftstrom (L₁) von der ersten Einlassöffnung (6) anschließbar ist.

5. Nacellevorrichtung (1) nach mindestens einem der vorhergehenden Ansprüche, **dadurch gekennzeichnet, dass** das Luftverteilungsmittel (8) mindestens teilweise rohrförmig oder als NACA-Einlass ausgebildet ist.

6. Nacellevorrichtung nach mindestens einem der vorhergehenden Ansprüche, **dadurch gekennzeichnet, dass** die Antriebsvorrichtung (12) einen Propeller aufweist und der im Betrieb eine Drehfläche (F) aufweist, wobei die erste Einlassöffnung (6) in dem Bereich der senkrechten Projektion der Drehfläche (F) auf die Oberseite der Pylonvorrichtung (2) liegt.

7. Nacellevorrichtung nach Anspruch 6, **dadurch gekennzeichnet, dass** die erste Einlassöffnung (6) vertikal unterhalb des Bereiches der Drehfläche (F) angeordnet ist, in dem der Gesamtdruck der vom Propeller geförderten Luft maximal ist.

8. Nacellevorrichtung **dadurch gekennzeichnet, dass** die von der Antriebsvorrichtung (12) über die erste Einlassöffnung (6) und / oder die zweite Einlassöffnung (7) eingeführten Luftströme (L₁, L₂) als Kühlluft zur Antriebsvorrichtung (12) und / oder einem Elektromotor (1) führbar sind.

9. Nacellevorrichtung nach mindestens einem der vorhergehenden Ansprüche, **dadurch gekennzeichnet, dass** die zweite Einlassöffnung (7) mindestens teilweise als NACA-Einlauf ausgebildet ist.

10. Senkrecht- Start- und -Landungsluftfahrzeug (10) mit mindestens einer Pylonvorrichtung (2) an einem Flügel (11), wobei die mindestens eine Pylonvorrichtung (2) eine Luftleitvorrichtung (5) nach mindestens einem der Ansprüche 1 bis 9 aufweist.

11. Senkrecht- Start- und -Landungsluftfahrzeug (10) nach Anspruch 10, **dadurch gekennzeichnet, dass** die Antriebseinheit (12) mit einer Verschwenkvorrichtung gekoppelt ist, die als Hebelgetriebe ausgebildet ist, insbesondere mit einem hydraulisch, elektrisch oder pneumatisch angetriebenen Hebelgetriebe.
